# EUROPEAN PATENT SPECIFICATION

(11) **EP 2 247 880 B1**
(45) Date of publication and mention of the grant of the patent: **26.10.2011**
(21) Application number: 09711590.1
(22) Date of filing: 20.02.2009
(51) Int. Cl.: F16K 31/06

(54) **VALVE SYSTEM, IN PARTICULAR FOR CONTROLLING THE SUPPLY OF A FLUID FROM A SUPPLY SOURCE TO A USER APPARATUS**
VENTILSYSTEM, IM BESONDEREN ZUR STEUERUNG DER ZUFUHR EINES FLUIDS AUS EINER VERSORGUNGSQUELLE ZU EINEM BENUTZERGERÄT
SYSTÈME DE SOUPAPE, DESTINÉ EN PARTICULIER À RÉGULER L'ALIMENTATION EN D'UN APPAREIL UTILISATEUR DEPUIS UNE SOURCE DE FLUIDE

(30) Priority: 22.02.2008 IT TO20080134
(43) Date of publication of application: 10.11.2010
(73) Proprietor: ELBI International S.p.A., 10129 Torino (IT)
(72) Inventor: DA PONT, Paolo, I-10123 Torino (IT); VILLANI, Pietro, I-10137 Torino (IT); SAMMARTINARO, Giovanni, I-35138 Padova (IT); CORBO, Roberto, I-10090 Trana (Torino) (IT); GARETTO, Luca, I-10146 Torino (IT); MARANGON, Mauro, I-10095 Grugliasco (Torino) (IT); CAPIZZI, Giosué, I-10090 Buttigliera Alta (Torino) (IT)
(74) Representative: Quinterno, Giuseppe
(86) International application number: PCT/IB2009/050700
(87) International publication number: WO 2009/104158

(56) References cited:
- EP-A- 1 106 922
- WO-A-02/070936
- DE-B3-102006 041 872
- US-A- 5 450 876

## Description

The present invention relates to a valve system, in particular for controlling the supply of a fluid from a supply source to a user apparatus.

More specifically the invention relates to a valve system according to the preamble of the accompanying Claim 1.

A valve system of this type is known from the document EP1106922.

One object of the present invention is to provide a valve system which is of the improved type, is technically reliable and at the same time may be produced in a simple and low-cost manner.

This object, together with others, is achieved according to the present invention by means of a valve system of the type mentioned above and defined by the characterizing part of the accompanying Claim 1.

Further characteristic features and advantages of the invention will emerge clearly from the following detailed description provided purely by way of a non-limiting example, with reference to the accompanying drawings in which:
- Figure 1 is a perspective view of a first example of embodiment of a valve system according to the invention;
- Figure 2 is a front elevation view of the valve system according to Figure 1;
- Figure 3 is an exploded view of the first embodiment of the valve system according to the invention;
- Figure 4 is a cross-sectional view along the line IV-IV of Figure 2;
- Figure 5 is a view, on a larger scale, of the details indicated by the line V-V in Figure 4; and
- Figures 6 to 9 show schematic views of a sequence of operating configurations which the first embodiment of the valve system shown in the preceding figures is able to assume;
- Figure 10 is an exploded view of a second embodiment of the valve system according to the present invention;
- Figures 11 to 14 show schematic views of a sequence of operating configurations which the second embodiment of the valve system is able to assume;
- Figure 15 shows a detailed view of a portion of the second embodiment of the valve system;
- Figure 16 is a diagram showing an example of a characteristic curve for the flow rate of a fluid passing through the valve system expressed as a function of the intensity of an excitation current; and

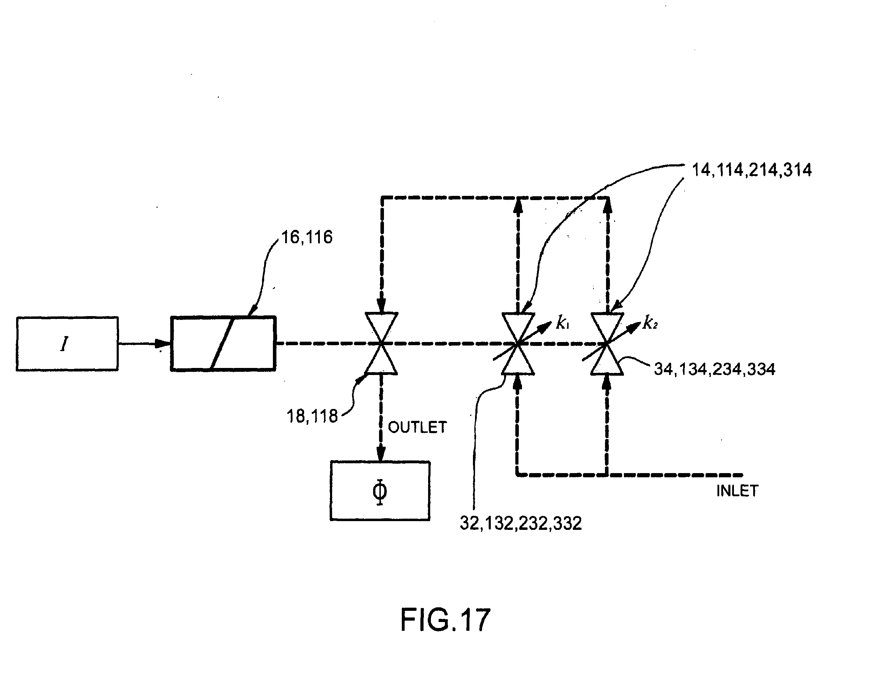

- Figure 17 is a diagram illustrating the fluid flow of the valve system according to the present invention;
- Figure 18 shows a longitudinally sectioned view of a first constructional variation of the first valve device and applicable to the first or second embodiment of the valve system;
- Figure 19 is a cross-sectional view of Figure 18 along the line XIX-XIX;
- Figure 20 shows a longitudinally sectioned view of a second constructional variant of the first inlet valve device and applicable to the first or second embodiments illustrated above; and
- Figure 21 is a cross-sectional view of Figure 20 along the line XX-XX.

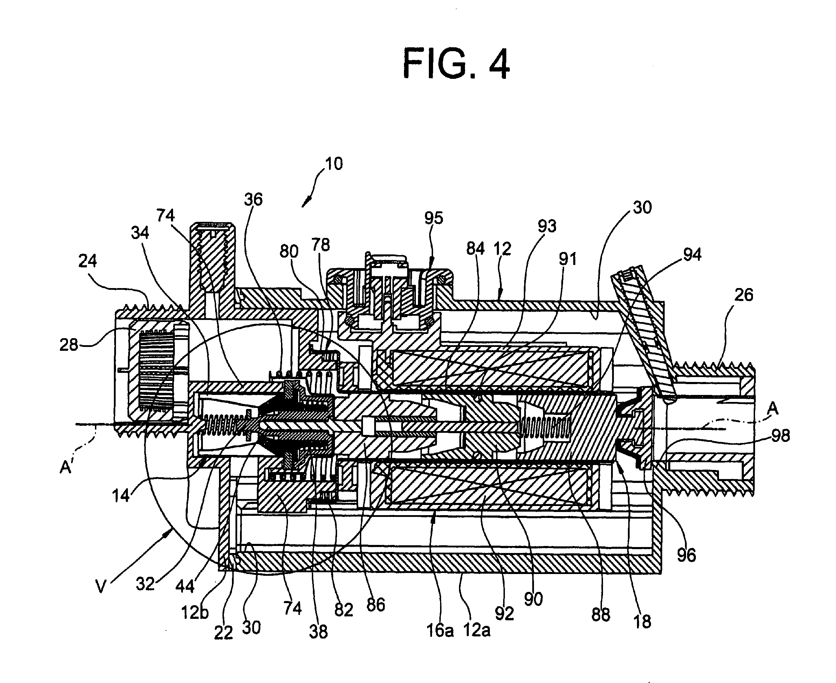

In the detailed description which follows terms or expressions such as "axial" or "axially", "radial" or "radially", "inwards" and "outwards" are understood as referring to the central axis A-A shown in Figure 4.

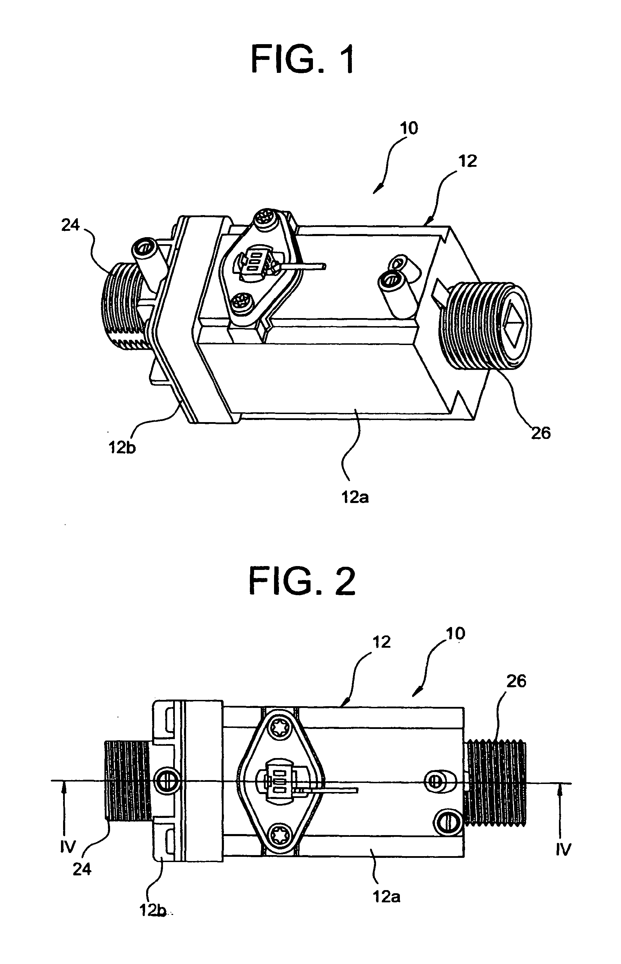

With reference in particular to Figures 1 to 5, 10 denotes a first example of embodiment of the valve system according to the present invention. This valve system 10 is suitable for controlling the supply of a fluid from a supply source to a user apparatus. In a particularly advantageous manner the valve system 10 is intended to be used for controlling the supply of a gas in a supply device, for example for a burner.

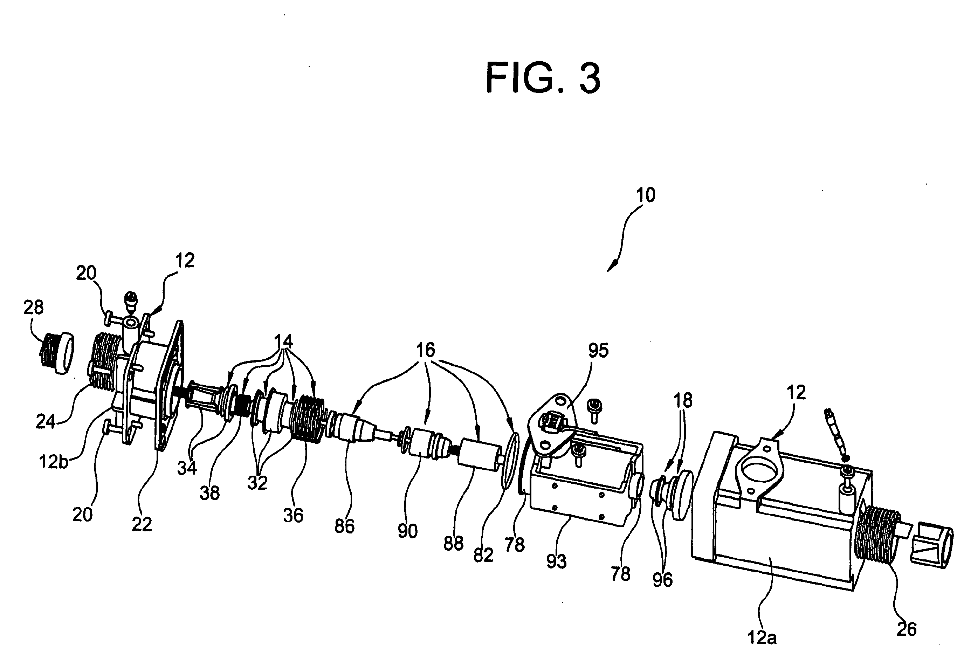

With reference in particular to Figure 3, the valve system 10 comprises a housing 12 which includes an inlet valve device 14, an electromagnetic actuating device 16 and an outlet valve device 18.

With reference in particular to Figures 3 and 4, it can be seen that the housing 12 is for example formed by a first substantially parallelepiped, hollow, container body 12a connected to a substantially rectangular cover 12b by means of fixing screws 20. A seal 22 is suitably arranged between the container 12a and the cover 12b

The cover 12b of the housing 12 comprises an inlet joint 24, while an outlet joint 26 is located at the opposite end of the container 12a. The inlet joint 24 and the outlet joint 26 are intended, respectively, to receive a fluid flow from the external supply source (not shown) and to supply this fluid flow to a user apparatus (not shown). A filter 28 is also installed inside the mouth of the inlet joint 24.

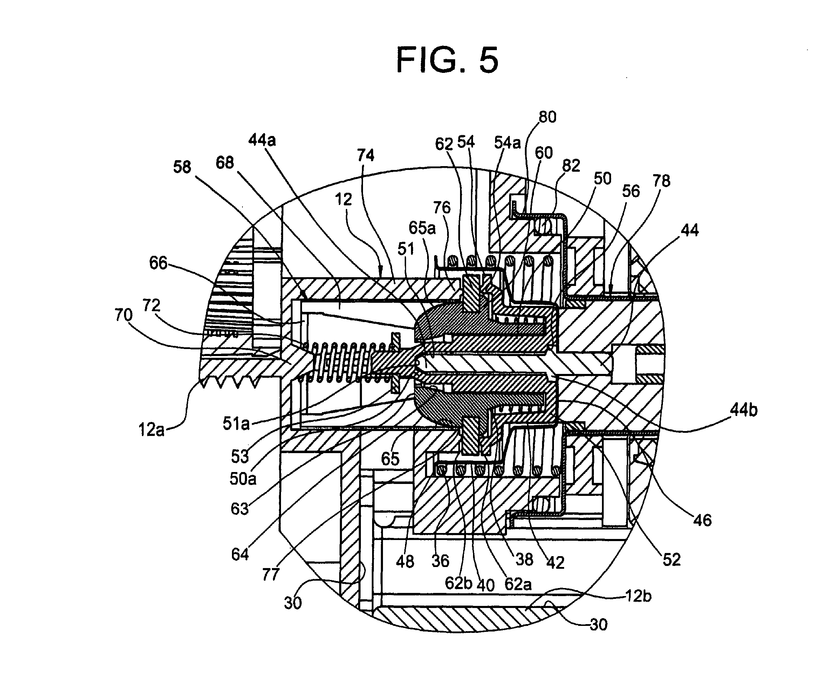

As can be seen more clearly in Figures 4 and 5, the inlet joint 24 is in fluid communication by means of the first valve device 14 with a middle section 30 which in turn communicates via the second valve device 18 with the outlet joint 26.

With reference in particular to Figures 3 and 4, the first valve device 14 comprises a first movable unit 32, a second movable unit 34 and a first closing spring 36 and a shut-off spring 38.

With reference in particular to Figures 4 and 5, the first movable unit 32 comprises preferably an outer cup member 40, an inner cup member 42 and an actuating stem 44.

The outer cup member 40 has a hollow flared shape with at one axial end a first substantially planar bearing portion 46 extending radially. At the other axial end, the outer cup member 40 widens into an outer flanged portion 48 which is directed outwards. The actuating stem 44 is mounted so as to be coaxial with the bearing portion 46.

The inner cup member 42 also has a hollow flared shape, but comprises internally a push-piece 50 which has in the vicinity of its distal end a modulating shut-off surface 50a with a substantially frustoconical shape. The push-piece 50 also has an axial cavity 51 inside which the actuating stem 44 is seated. The distal end 44a of the actuating stem 44 bears against the bottom 51a of the cavity 51. A washer 53 is stably fixed around the distal end of the push-piece 50.

In a similar manner to the outer cup member 40, the inner cup member 42 also includes at an axial end a second bearing portion 52 which extends radially outwards from the push-piece 50 and has a substantially planar shape. At the other axial end, the inner cup member 42 widens into a second flanged portion 54 which has a first intercepting shut-off surface 54a.

During assembly the outer cup member 40 and the inner cup member 42 are in contact with each other via the respective bearing portions 46 and 52.

The actuating stem 44 has a diametrally widened portion 44b which is arranged inside a recess 56 formed between the bearing portions 46 and 52 of the outer cup member 40 and the inner cup member 42.

The second movable unit 34 comprises a sleeve 58 with an axial cavity aligned with the inner cup member 42. The sleeve 58 has externally along an axially middle section thereof a first radially outer shoulder 60 inside which a peripheral seal 62 is inserted. The sleeve 58 houses and guides slidably inside it the push-piece 50 and in turn is partially inserted with the possibility of relative sliding within the inner cup member 42 inside the annular interstice situated between said push-piece 50 and the second flanged portion 54. The shut-off spring 38 is arranged between the second bearing portion 52 and the first shoulder 60.

On the opposite side to that directed towards the inner cup member 42, the sleeve 58 also has a tapered nose piece 65 which has at its end a second shoulder 63 arranged radially more inwards than the first shoulder 60. Furthermore the tapered nose piece 65 has an axial cavity containing a first modulating valve seat 64 associated with the first modulating shut-off surface 50a, while an axially directed side of the seal 62 provides a first intercepting valve seat 62a for the first intercepting shut-off surface 54a.

The tapered nose piece 65 also has a radially external side surface which defines a second modulating shut-off surface 65a, the operation of which will be clarified below in the remainder of the present description. Furthermore, four rod-shaped ends 68 (only two of which are visible) extend from the tapered nose piece 65, from diametrically opposite positions, and merge together in an annular guide ring 66.

The cover 12b has internally a frustoconical pin 70 which during assembly passes through an axial opening defined in the annular guide ring 66. Preferably but not necessarily, an opposition spring 72, which helps to keep the push-piece 50 and the sleeve 58 in their respective relative positions is arranged between the washer 53 and the frustoconical pin 70.

The cover 12b comprises furthermore tubular walls 74 which surround the frustoconical pin 70 and are intended to guide the sleeve 58 in an axially sliding manner. The tubular inner walls 74 provide a second intercepting valve seat 76 defined at their axial end which during assembly is directed towards the seal 62. Therefore on a side opposite to the first intercepting valve seat 62a, the seal 62 has a second shut-off surface 62b which is suitable for making bearing contact against the second intercepting valve seat 76.

Furthermore the tubular walls 74 have a second modulating valve seat 77 formed by their radially inner surface which operationally faces the second modulating shut-off surface 65a of the tapered nose piece 65 of the sleeve.

As will become clear from the remainder of the present description, the first valve device 14 is able to provide modulated regulation of the fluid flow supplied from the inlet joint 24 and directed towards the middle section 30.

With reference in particular to Figures 3 and 4, the electromagnetic actuating device 16 is contained in a fluid tight manner inside the middle section 30 and comprises a tubular part 78 with a widened portion 80 fitted around the tubular inner walls 74 of the cover 12a of the housing 12 by means of a first seal 82, and a narrow portion 84.

The actuating device 16 also comprises a first core and a second core of ferromagnetic material 86 and 88 which are housed inside the narrow portion 84 and separated in a fluid-tight manner by a fixed stop portion 90. The narrow portion 84 is surrounded by an induction coil 92 embedded in a hollow body 93 and is therefore sealingly closed with respect to the middle section 30. The hollow body 93 is fixed to the container 12b via fastening means 95 (see Figures 3 and 4) which are known per se.

The actuating stem 44 is stably fixed to the first core 86, while a second closing spring 94 is arranged between the second core 88 and the stop portion 90. It should be noted that a second seal 91 is located along a central section of the fixed stop portion 90, being arranged between the outer surface of this stop portion 90 and the inner surface of the tubular part 78.

The first and second seals 82, 91 help prevent the unwanted flow of fluid through the tubular part 78 in the direction defined by the axis A-A.

The outlet valve device 18 comprises an outlet shut-off member 96 with a metallic support 97 which are mounted on the second core 88 and an outlet valve seat 98 formed in the housing 12 and facing the outlet joint 26. Therefore, the outlet valve device 18 allows (on/off type) interception of the fluid supplied from the middle section 30 and directed into the outlet joint 26.

As can be seen in Figures 1 to 5, the first and second cores 86, 88 are displaceable inside the tubular part 78 in the direction of the same axis A-A (Figure 4) and in opposite senses. The actuating device 16 is connected to an external control device (not shown) able to modulate suitably the intensity I of the excitation current flowing inside the coil 92.

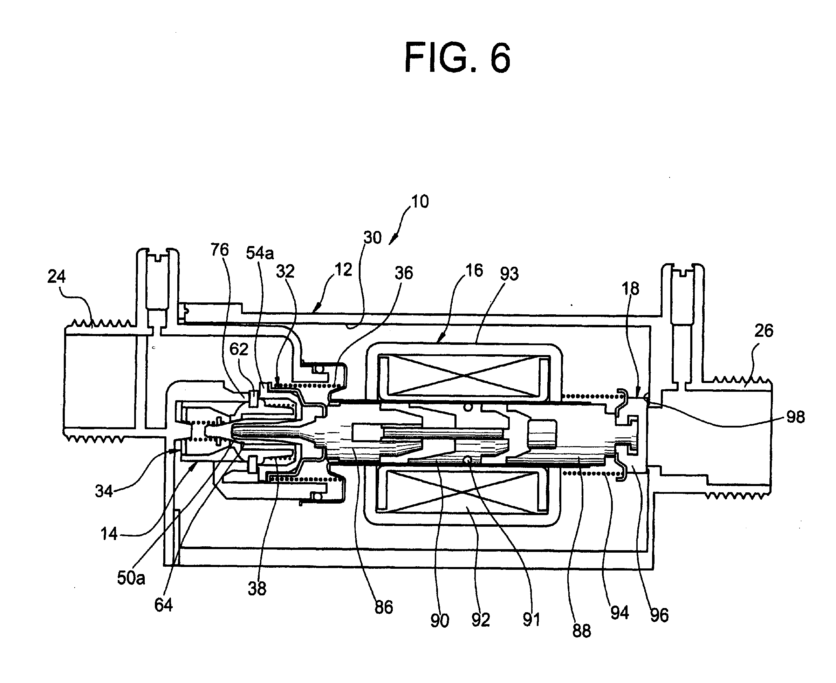

With reference to Figures 6 to 9, the operating principle of the valve device 10 illustrated in the previous figures will now be described. These figures show schematically the valve device 10 with the sole aim of illustrating its various operating configurations and therefore may have a number of small structural differences compared to Figures 1 to 5, these not altering, however, the mode of operation thereof.

With reference to Figure 6, the valve device 10 is shown in a completely closed configuration, where the first and second valve devices 14 and 18 are both in a completely closed configuration (also shown in Figures 4 and 5).

In this condition, the first closing spring 36 pushes the first movable unit 32 so that the intercepting shut-off surface 54a bears against the intercepting valve seat 62a provided by the seal 62.

In turn, the first movable unit 32 pushes the seal 62 so that its main inlet shut-off surface 62b bears against the main inlet valve seat 76.

Moreover, the second closing spring 94 keeps the outlet shut-off member 96 against the respective outlet valve seat 98.

Consequently, the fluid entering into the inlet joint 24 is unable to access the middle section 30 and the latter is not in fluid communication with the outlet joint 26.

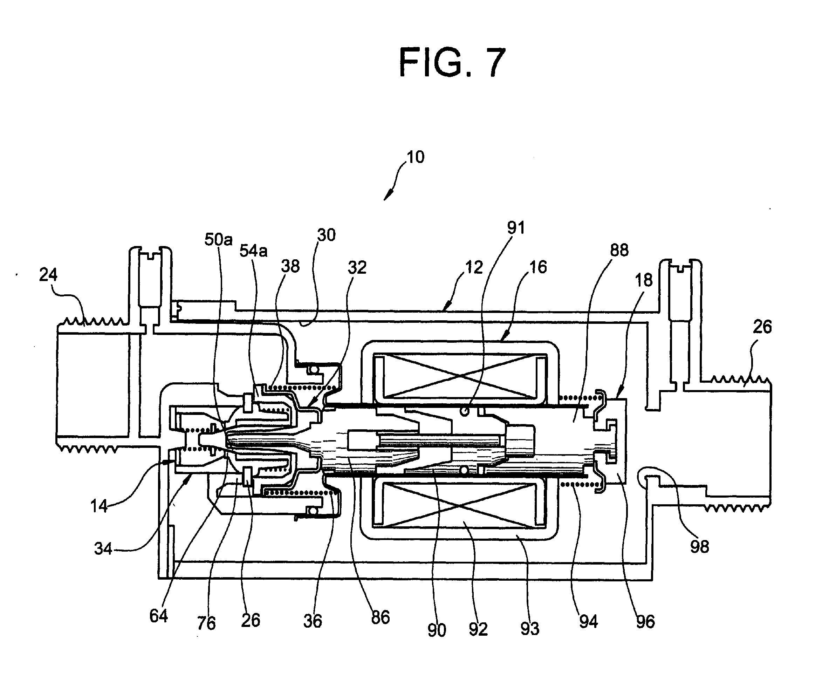

With reference to Figure 7, the valve system 10 is shown in a preliminary open configuration, where the inlet valve device 14 is in the completely closed condition, while the outlet valve device 18 is in a completely open condition.

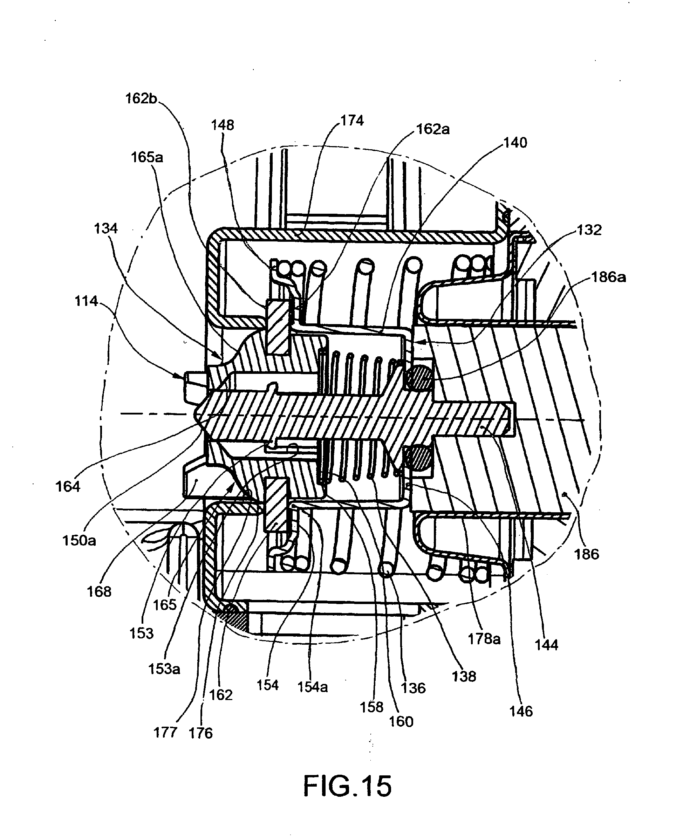

In this situation the induction coil 92 is passed through by an electric current which has a intensity I less than a first supply threshold I₁ (see also Figure 15).

On the one hand, the intensity I<I₁ of the electric current is sufficient to excite the second core 88, moving it from an extracted position (Figures 4, 5 and 6) into a retracted position (Figure 7), overcoming the resilient recall force of the second closing spring 94. In this way the outlet shut-off member 96 is recalled and raised from the outlet valve seat 98, establishing fluid communication between the middle section 30 and the outlet joint 26.

On the other hand this intensity I<I₁ is insufficient to move the first core 86, since the first closing spring 36 has dimensions suitable for opposing a resilient recall force greater than that exerted by the second closing spring 94 and greater than the electromagnetic force acting on the first core 86. Therefore, the fluid flow between the inlet joint 24 and the middle section 30 is prevented.

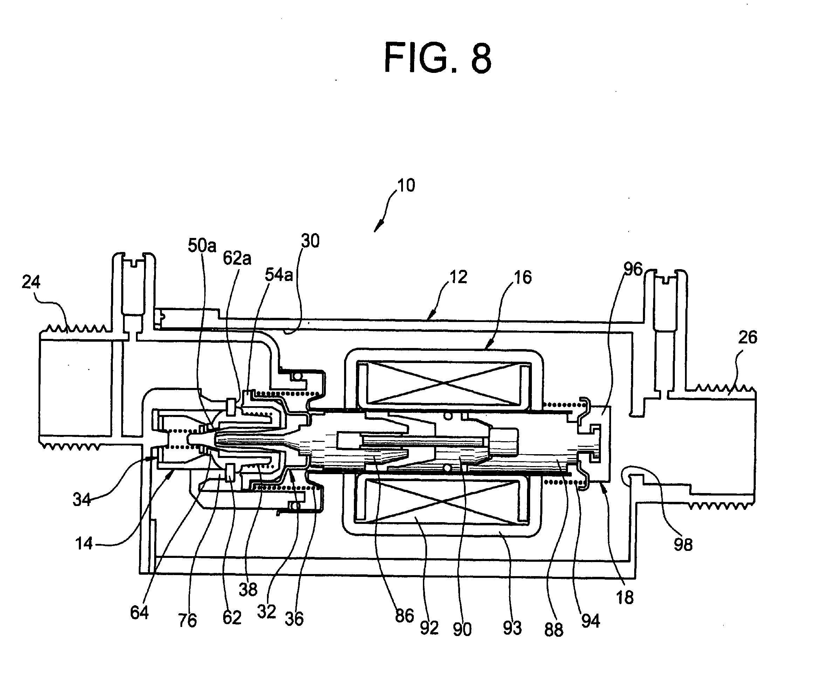

With reference to Figure 8, the valve system 10 is shown in a first modulated open configuration, where the inlet valve device 14 is in a first modulated open condition and the outlet valve device 18 is in a completely open condition.

In this situation the induction coil 92 is passed through by an electric current I which has an intensity I greater than the first supply threshold I₁, but less than the second supply threshold I₂ (see Figure 15).

Compared to that which occurs in the preliminary open configuration, the intensity I₁<I<I₂ is sufficient to move the first core 86 from a first extracted position (Figures 4, 5, 6 and 7) into a partially retracted position (Figure 8) since the size of the first closing spring 36 is selected in such a way that the electromagnet force acting on the first core 86 overcomes the resilient recall force exerted by the first closing spring 36.

Consequently, the actuating stem 44, which is displaceably locked with the first core 86, "drives" the outer cup 40 owing to the bearing action of the widened portion 44b against the bearing portion 46. In this way the first intercepting shut-off surface 54a is raised from the first intercepting valve seat 62a of the seal 62, while the first modulating shut-off surface 50a moves away from the first modulating valve seat 64. At the same time the shut-off spring 38 continues to exert a pressure on the first shoulder 60 and keeps the second intercepting shut-off surface 62b pressed against the second intercepting valve seat 76.

In this way the fluid supplied from the inlet joint 24 flows radially inwards inside the interstice formed in this modulated open configuration between the first and second movable units 14 and 18. Operationally speaking, the fluid passes initially through a first larger annular aperture which has a fixed through-flow cross-section and is formed between the intercepting shut-off surface 54a and the first intercepting valve seat 62a. The fluid then flows through a second smaller annular aperture which has a cross-section which can be modulated depending on the travel of the first core 86 and is formed between the first modulating shut-off surface 50a and the first modulating valve seat 64.

Consequently, the fluid flows radially outwards from the sleeve 58 along the middle section 30 and is free to pass through the outlet joint 26.

In short, owing to the action of the inlet valve device 14, the fluid supplied from the inlet joint 24 undergoes various changes in direction along its path inside the housing 12 relative to the direction defined by the axis A-A.

Modulation of the fluid flow passing through the first valve device 14 is dependent upon the current which passes through the induction coil 92. In fact the intensity I₁<I<I₂ of the current is related to the degree of displacement of the first modulating shut-off surface 50a away from the first modulating valve seat 64.

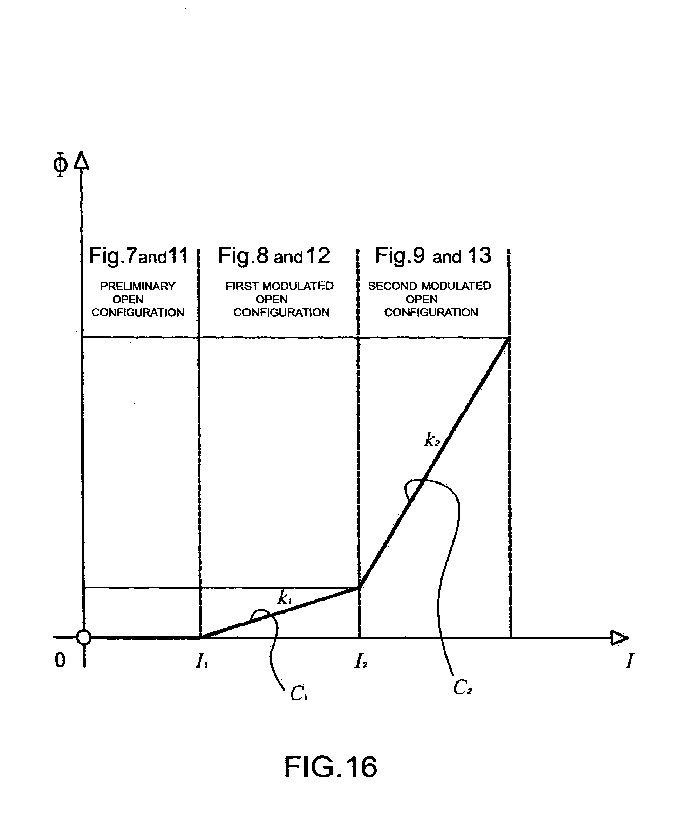

Referring to Figures 15 and 16 it can be noted that the flow rate Φ of the fluid passing through the first valve device 14 is a function of the current I, following a first section of a characteristic curve C₁ which increases with an increase in the intensity of the current I. Along the first section of the characteristic curve C₁ it can be seen that, for current intensity values I₁<I<I₂, the fluid flow rate Φ increases with a rate of increase k₁. In this example of embodiment the first section of the characteristic curve C₁ is substantially rectilinear, although the progression is to be regarded as purely indicative and not definitive. It is desirable to obtain a value for the rate of increase k₁ which is as small as possible and an amplitude of the range I₁<I<I₂ which is as wide as possible so as to be able to obtain a greater "sensitivity" during control of the fluid flow rate Φ.

When the current intensity I is increased to reach the second supply threshold I₂, the first movable unit 32 is arranged so that the washer 53 bears against the second shoulder 63 formed in the tapered nose piece 65 of the sleeve 58.

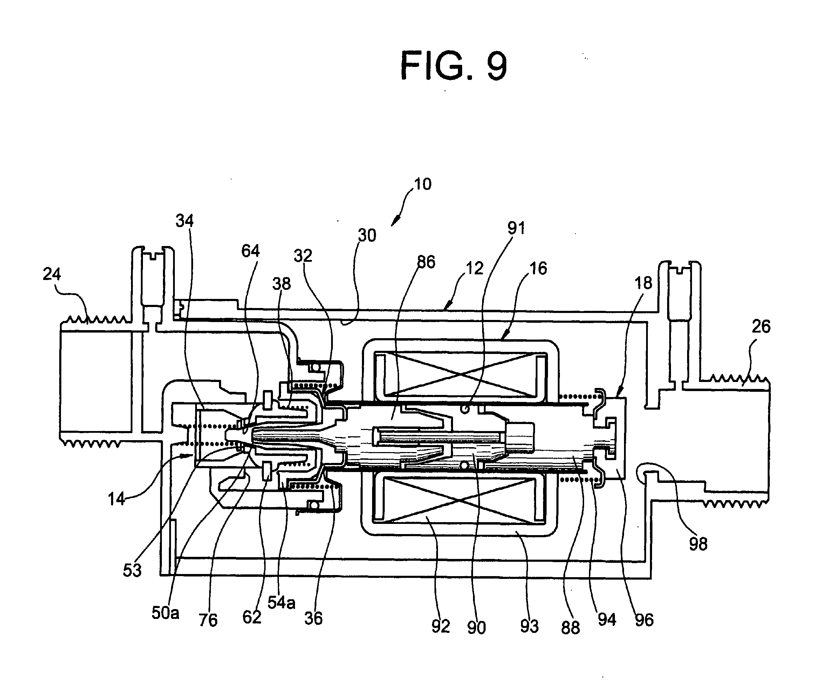

With reference to Figure 9, the valve system 10 is shown in a second modulated open configuration, where the first valve device 14 is in a second modulated open condition and the second valve device 18 is in a completely open condition.

In this situation the induction coil 92 is passed through by an electric current I which has an intensity I greater than the second supply threshold I₂. Compared to that which occurs in the modulated open configuration, the current I>I₂ allows movement of the first movable unit 32 beyond the partially retracted portion of the first core 86 shown in Figure 8. Owing to the bearing contact between the washer 53 and the second shoulder 63, the second movable unit 34 is displaceably locked with the first movable unit 32 and therefore the second intercepting shut-off surface 62b of the seal 62 is raised from the second intercepting valve seat 76.

In this way, the fluid supplied from the inlet joint 24, in addition to flowing within the interstice formed between the first and second movable units 32 and 34, is able to pass through a third aperture present between the second intercepting shut-off surface 62b of the seal 62 and the second intercepting valve seat 76. Then the fluid passes through a fourth aperture present between the second modulating shut-off surface 65a of the tapered nose piece 65 of the sleeve 58 and the second modulating valve seat 77. In a similar manner to that which occurs in the operating configuration shown in Figure 8, this fourth aperture allows modulation of the fluid flow rate Φ as a function of the current intensity I.

Referring to Figures 15 and 16 it can be noted that, for current intensity values I>I₂, the fluid flow rate Φ follows a second section of the characteristic curve C₂ which increases with an increase in the current intensity I. It should be noted that, as in the case of the first section of the characteristic curve C₁, the progression of the second section of the characteristic curve C₂ is to be regarded as purely indicative and not definitive.

From an examination of the second section of the characteristic curve C₂ it can be seen that the fluid flow rate Φ increases with a rate of increase k₂ greater than the first rate of increase k₁ associated with the first section of the characteristic curve C₁. This situation is due to the fact that, in the second modulated open condition, the cross-section of the fourth aperture present between the second modulating shut-off surface 65a and the second modulating valve seat 77 is proportionally greater than the second aperture existing between the first modulating shut-off surface 50a and the first modulating valve seat 64.

Therefore, this valve system 10 may be set to two different modulated open conditions. In the first modulated open condition, shown in Figure 8, it can be understood how the valve system 10 allows precise and sensitive regulation of the fluid flow rate between the inlet joint 24 and the outlet joint 26. Instead, in the second modulated open condition shown in Figure 9, it can be understood how the valve system 10 allows "less sensitive" regulation of the fluid flow than that which is achieved for the first modulated open condition.

When the electromagnetic actuating device 16 is de-energised, the valve system 10 assumes again the initial completely closed configuration shown in Figures 4 to 6 by means of the action of the springs 36, 48 and 94.

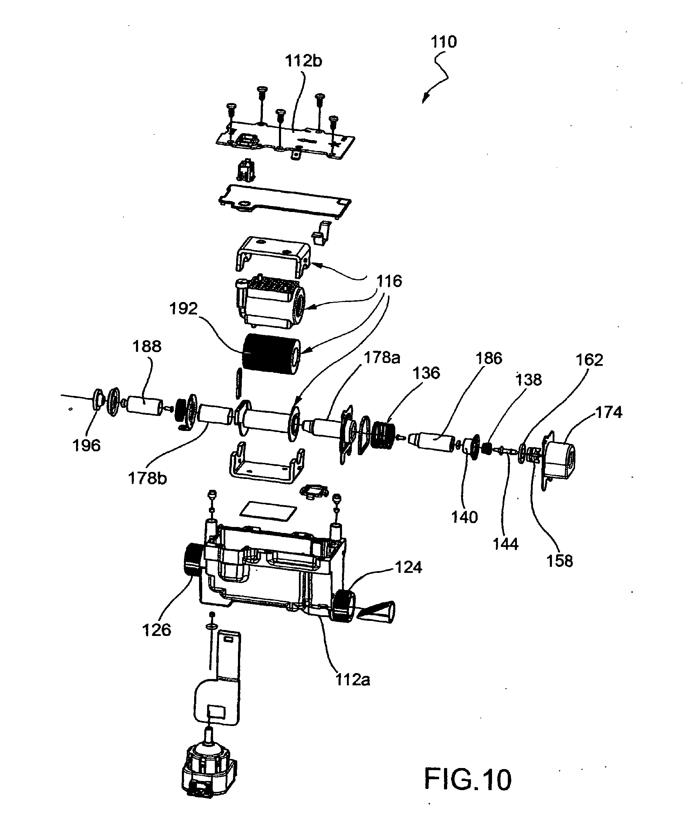

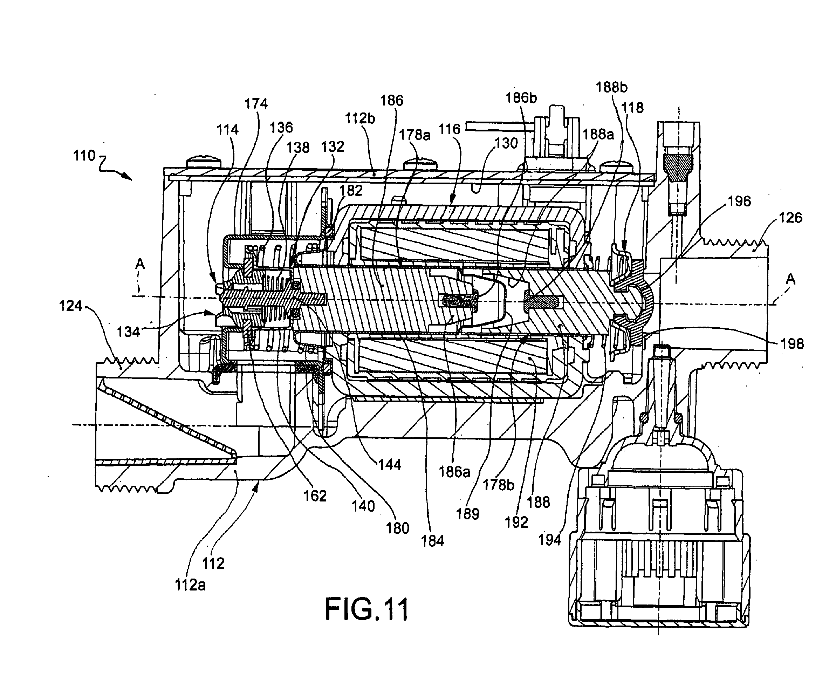

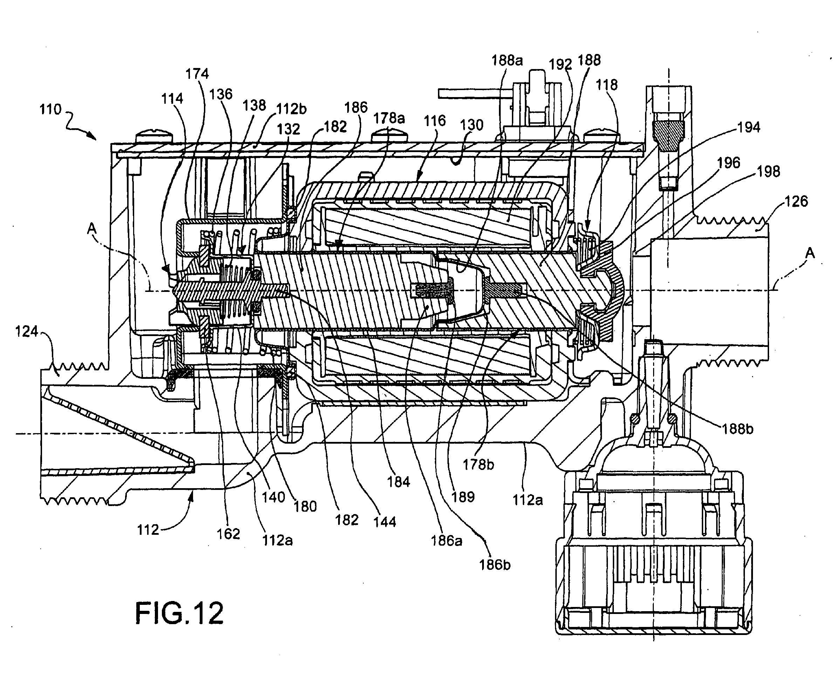

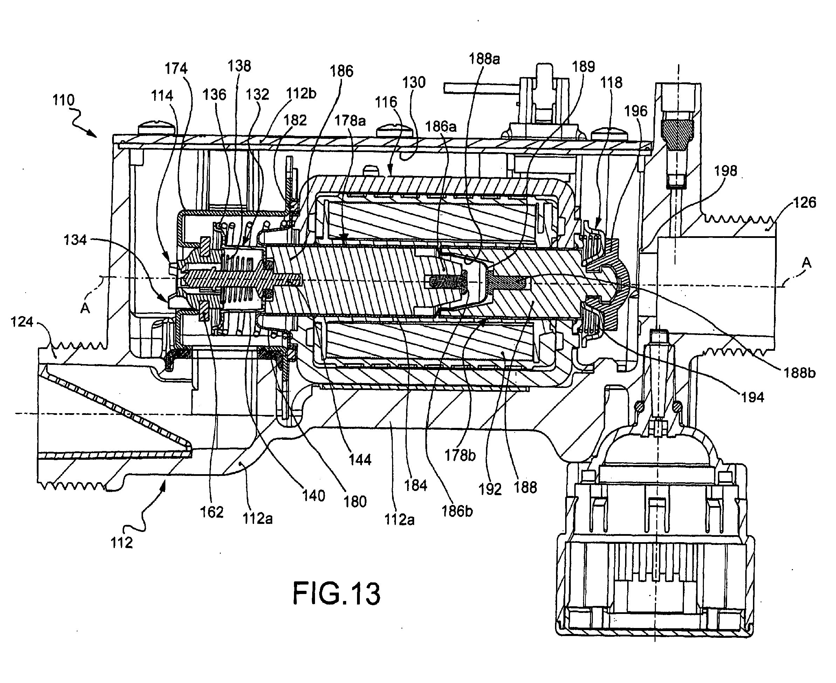

With reference to Figures 10 to 15, a second embodiment of the valve system according to the present invention is shown. Parts which are similar or analogous to those in the previous embodiment are indicated by the same reference numbers and letters preceded by 1.

For the sake of brevity, details which are identical or similar to those in the previous embodiment will not be described below, but some of the main characteristic features which differ from the valve system illustrated in the previous figures will be highlighted.

Firstly reference is made to the constructional details of the first valve device, shown more clearly in Figure 15.

Differently from the first embodiment described above, the cover 112b is mounted on top of the container body 112a.

By way of a further difference from the first embodiment, the first movable unit 132 does not have the inner cup member 42, the function of which is performed directly by the (outer) cup member 140. In this connection, the cup member 140 has an end projection directed in the radial direction and comprising a first substantially radial flange section 154 and a second flange section 148 axially removed from the remainder of the cup member 140. The first flange section 154 has the first intercepting surface 154a, while the second flange section 148 bears against the first closing spring 136.

Differently from the first embodiment, the modulating shut-off surface 150a is provided on the distal end of the stem 144.

Again differently from the first embodiment, the washer 53 is not present and its "driving" function is performed by a radial projection 153 present along an axially middle portion of the stem 144. The abovementioned radial projection engages inside a corresponding groove 153a formed in the second movable unit 134.

Differently from the first embodiment, the second movable unit 134 has a sleeve 158 with no regions which have the same function as the first shoulder 60 and the second shoulder 63. In fact, the shut-off spring 138 presses directly against an annular recessed portion 160 of the sleeve 158 and, as already described above, in the absence of the washer 53 there is no longer the need for a corresponding shoulder.

Differently from the first embodiment, the sleeve 158 does not have the annular guide ring 66, but has instead a plurality of end teeth 168 projecting axially and shorter than the rod-shaped ends 68.

Differently from the first embodiment, the frustoconical pin 70 and opposition spring 72, which have an essentially centring and guiding function, are absent. A function similar to that of the abovementioned parts is performed by the radial projection 153 and the axial groove 153a.

A further difference from the first embodiment consists in replacement of the inner walls 74 by a fixing bracket 174 made of metallic material and suitable for guiding the second movable unit 134. In a manner similar to that achieved in the first embodiment by means of the inner walls 74, the mounting bracket 174 also provides the second intercepting valve seat 176 and the second modulating valve seat 177. In this way, the absence of the inner walls 74 simplifies the method for manufacture of the cover 112a and therefore the inner housing 112 which is typically performed by means of die-casting or similar processing methods.

By way of a further difference, it can be seen that a seal 186a is located between the stem 144, the first core 186 and the bearing portion 146 of the cup member 140.

In this second embodiment of the system according to the present invention certain differences as regards the actuating device 116 may also be noted. In order to appreciate these differences, reference should be made to Figures 10 to 14.

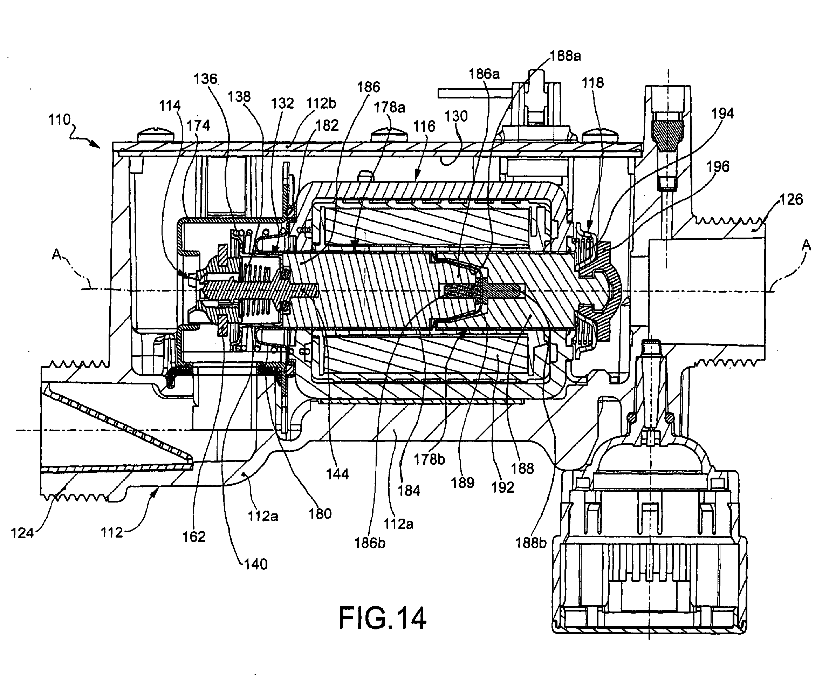

Differently from the first embodiment, the electromagnetic actuating device 16 comprises a first tubular part 178a and a second tubular part 178b. The first tubular part 178a at one axial end is pressed against the mounting bracket 174 via an annular seal 182, while a closed end wall 189 is present at the other axial end. The end wall 189 of the first tubular part 178a has a substantially finger-like shape which matches a tapered end 186a of the first ferromagnetic core 186, when the latter is in the retracted position (see Figure 14). Furthermore it can be noted how the second tubular part 178b instead has a hollow through-shape and slidably houses inside it the second ferromagnetic core 188. The latter has a substantially frustoconical axial cavity 188a which matches the finger-like end wall 189 of the first tubular part 178a. Furthermore, first and second noise-suppression elements 186b and 188b, which have a substantially mushroom-like shape and are made for example of elastomer material, are inserted in the end wall of the tapered end 186a and the end wall of the axial cavity 188a. The enlarged heads of the noise-suppression elements 186b and 188b face the finger-like end wall 189 and have the function of dampening the impact of the ferromagnetic cores 186 and 188 against it when they assume the retracted position.

Owing to this particular structure of the actuating device 116 there is no need to use the fixed stop part 90 with the associated seal 93, as instead occurs in the first embodiment. In this way assembly of the system 110 is simplified. A further advantage which arises as a result of the absence of the fixed stop part 90 is the improved efficiency of the magnetic circuit since it is possible to increase the size of the cores 186 and 188 and therefore the mass of ferromagnetic material contained in the first and second tubular parts 178a and 178b.

Moreover, as can be better appreciated with reference to Figure 10, the second embodiment of the system 110 envisages transverse mounting of the components inside the housing 112 relative to the longitudinal axis A-A. Instead, with reference to Figure 3, the first embodiment 10 envisages assembly substantially in the axial direction and parallel to the longitudinal axis A-A.

In any case, in both embodiments it can be noted how the electromagnetic actuating device 16 is advantageously intended to be passed over externally by the fluid flow passing through the middle section 30 and to have a convective heat exchange relationship with this fluid flow.

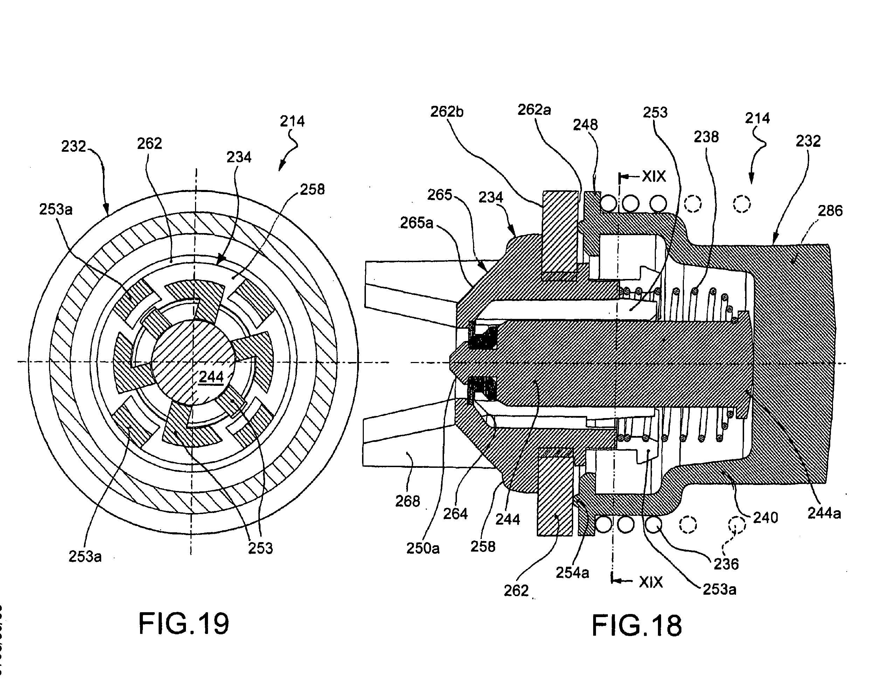

With reference to Figures 18 and 19, 214 denotes a possible constructional variation of the first inlet valve device 114 of the second embodiment of the system 110. Parts which are similar or analogous to those of the second embodiment are indicated by the same reference numbers and letters, but preceded by the number 2 instead of 1. It can be noted how the inlet valve device 214 is also applicable to the first embodiment of the system 10.

For the sake of brevity, details which are identical or similar to those in the second embodiment of the system will not be described below, but some of the main characteristic features which differ from said embodiment will be highlighted.

As can be seen in Figure 18, differently from the second embodiment, the first core 286 is integral with the single cup member 240. The cup member 240 has substantially the same characteristic features as the cup member 140 of the second embodiment of the system.

Compared to the second embodiment, a different mechanism is used to guide the actuating stem 244. In fact, in place of the radial projection 153 and the groove 153a, the sleeve 258 has a first inner ring of guiding ribs or flanges 253 projecting radially inside the cavity of said sleeve 258 and extending axially. The radially inner ends of the guiding flanges 253 are adapted to the outer side surface of the actuating stem 244 so as to guide the movement thereof. Furthermore, the sleeve 258 has a plurality of engaging lugs 253a which project in the direction of the movable core 286. These engaging lugs 253a are operationally intended to engage against driving portions (not visible in the figures) projecting radially inside the cavity defined by the cup 240. In this way, the bearing contact between the abovementioned driving portions and the engaging lugs has the same function as the bearing contact between the radial projection 153 and the groove 153a (second embodiment shown in Figure 14) and between the washer 53 and the bearing surface 63 (first embodiment shown in Figure 5), namely allows the transition from the first modulated open condition into the second modulated open condition.

By way of a further difference from the second embodiment, the actuating stem 244 is not embedded in the ferromagnetic core 286, but has a radially enlarged contact base 244a with a substantially convex end wall which is supported by the flat bearing surface of the core 286. The shut-off spring 238 is arranged between the bearing base 244a and the sleeve 258. Consequently the presence of the seal 186a is no longer required.

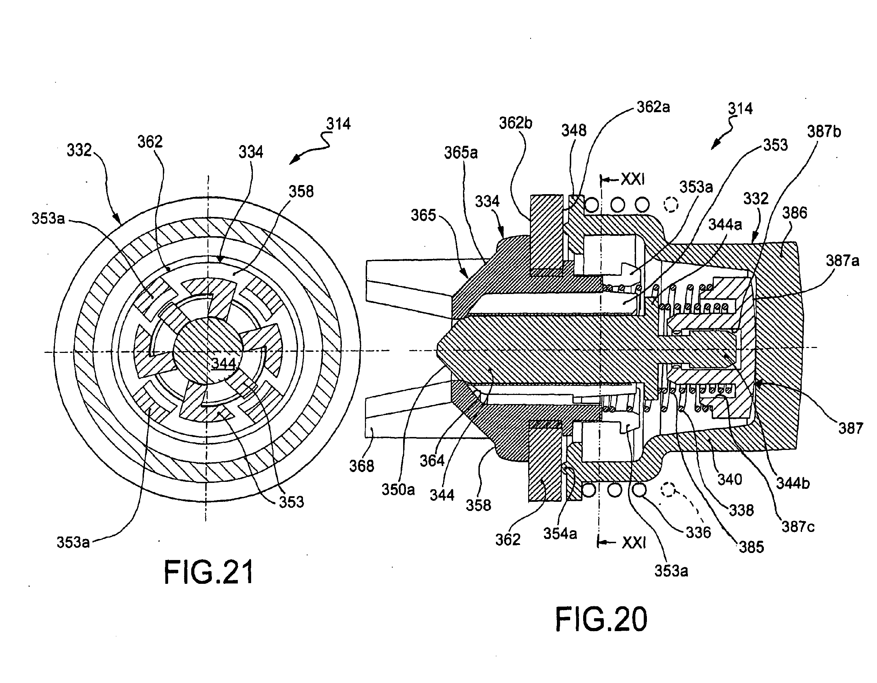

With reference to Figures 20 and 21, 314 denotes a possible constructional variant of the first inlet valve device 214 of the variation of embodiment shown in Figures 18 and 19. Parts which are similar or analogous to those of said variation of embodiment are indicated by the same reference numbers and letters, but have the number 3 instead of 2 in front. It can be noted how the inlet valve device 314 is compatible both with the first embodiment of the system 10 and with the second embodiment of the system 110.

For the sake of brevity, details which are identical or similar to those in the abovementioned first variation of embodiment shown in Figures 18 and 19 will not be described below, but some of the main characteristic features which differ from said embodiment will be highlighted.

Differently from that shown in Figures 18 and 19, the end part of the actuating stem 344 comprises a radially enlarged portion 344a followed by an axial mushroom-shaped tail-piece 344b which has a narrower cross-section than the remainder of the actuating stem 344. Furthermore a support part 387 is arranged between the core 386 and the actuating stem 344 and has a convex bearing end wall 387a which bears against the flat bearing surface of the core 386 inside the cup 340. The bearing part 387 has a central recess 387b housing with interference the axial tail-piece 344b. The shut-off spring 338 is arranged between the support part 387 and sleeve 358, being housed inside a radially external region of this support part 387. Furthermore a further positioning spring 385 is arranged between the radially enlarged portion 344a and an annular channel 387c formed around the recess 387b.

One of the advantages of the first and second variations of embodiment of the valve device 214, 314 consists in the cooperation between the stem 244, 344 and the respective movable core 286, 386. Each of the stems 244, 344 is mounted so as to be pivotable with respect to the movable core 286, 386 and the remainder of the first movable unit 232, 332, preferably in a hinged manner. In greater detail, this possibility for oscillation is advantageously due to the bearing contact between, respectively, the convex surface of the base 244a or the end wall of 387a and the flat surface of the respective core 286, 386. This feature ensures that centring of the stem 244, 344 is maintained and recovery of the play during closing of the inlet valve device 214, 314, preventing jamming or misalignment which may adversely affect operation of the valve system 10.

In further variants not shown, which are applicable to both the first embodiment and the second embodiment, it may be envisaged that the actuating device 16, 116 is not contained inside the middle section 30, 130, but is mounted outside the housing 12, 112.

In other variants not shown, which are applicable to both the first embodiment and the second embodiment, the valve system 10, 110 may comprise a pressure sensor (not shown) located downstream of the inlet valve device 14, 114, 214, 314. Preferably the pressure sensor may be located in the middle section 30, 130. By way of example, the pressure sensor may be mounted on a membrane (not shown) housed in the middle section 30, 130 and comprises a piezoelectric device (not visible) which detects the oscillations and vibrations of the membrane.

Naturally, without modifying the principle of the invention, the embodiments and the constructional details may be greatly varied with respect to that described and illustrated purely by way of a non-limiting example, without thereby departing from the scope of the invention as defined in the accompanying claims.

## Claims

1. Valve system (10; 110), in particular for controlling the supply of a fluid from a supply source to a user apparatus, said system comprising:
a housing (12; 112) including
an inlet joint (24; 124) and an outlet joint (26; 126) intended to receive an incoming fluid flow and to discharge said fluid flow, respectively; and
a middle section (30; 130) in fluid communication with the inlet joint (24; 124) and the outlet joint (26; 126), respectively;
- inlet and outlet valve means (14; 114; 214; 314; 18; 118) arranged between the inlet joint (24; 124) and the middle section (30; 130) and between the middle section (30; 130) and the outlet joint (26; 126); and
- electromagnetic actuating means (16; 116) designed to be passed through by an electric excitation current having an intensity (I) which can be modulated so that the actuating means (16; 116) arrange the inlet valve means (14; 114; 214; 314) in a modulated open condition where said fluid flow rate (Φ) increases with an increase in the intensity (I) of said current;
said electromagnetic actuating means (16; 116) being designed to be activated by a current with a modulated intensity (I);
the valve system (10; 110) being **characterized in that**
the inlet valve means (14; 114) comprise first and second inlet valves (54, 62; 62, 76) provided with first and second resilient closing means (36; 38), respectively tending to retain said inlet valves (54, 62; 62, 76) in a closed condition, and **in that**
the electromagnetic actuating means (16; 116) comprise one solenoid (92; 192) arranged for controlling both said inlet valves (54, 62; 62, 76) by controlling a first movable ferromagnetic core (86; 186; 286; 386) which is designed to assume
a rest position in which both inlet valves (54, 62; 62; 76) are closed, when said solenoid (92; 192) is deenergized, and
first and second working positions in which the first inlet valve (54, 62) and both inlet valves (54, 62; 62, 76), respectively, assume a modulated open condition, when the current (I) in said solenoid (92; 192) is modulated within first and second ranges of values, respectively.

2. Valve system according to Claim 1, in which in said first and second ranges of values the solenoid current (I) is increased in accordance with a first and second rate of increase (k₁; k₂), respectively, said first rate of increase (k₁) being less than said second rate of increase (k₂).

3. Valve system according to Claim 1 or 2, in which the first movable unit (32; 132; 232; 332) and the second movable unit (34; 134; 234; 334) are mounted so as to be slidable relative to each other.

4. System according to Claim 3, in which the first movable unit (32; 132; 232; 332) and the second movable unit (34; 134; 234; 334) are mounted so as to be coaxial with each other.

5. Valve system according to any one of Claims 1 to 4, in which the first movable unit (32; 132; 232; 332) defines a first intercepting shut-off surface (54a; 154a; 254a; 354a) and the second movable unit (34; 134; 234; 334) defines a first intercepting valve seat (62a; 162a; 262a, 362a), said first resilient closing means (36; 136; 236; 336) tending to push the first intercepting shut-off surface (54a; 154a; 254a; 354a) against the first intercepting valve seat (62a; 162a; 262a; 362a).

6. Valve system according to Claim 5, in which said actuating means (16) raise the intercepting shut-off surface (54a; 154a; 254a; 354a) from the first intercepting valve seat (62a; 162a; 262a; 362a) when the current intensity (I) is greater than a first minimum threshold value (I₁) suitable for opposing the action of the first closing spring (36; 136; 236; 336).

7. Valve system according to Claim 5 or 6, in which the first movable unit (32; 132; 232; 332) also defines a first modulating shut-off surface (50a; 150a; 250a; 350a) and the second movable unit (34; 134; 234; 334) defines a first modulating valve seat (64; 164; 264, 364), said first resilient closing means (36; 136; 236; 336) tending to reduce the distance between the fust modulating shut-off surface (50a; 150a; 250a; 350a) and the first modulating valve seat (64; 164; 264; 364).

8. Valve system according to Claim 7, in which said actuating means (16) separate the first modulating shut-off surface (50a; 150a; 250a; 350a) from the first modulating valve seat (64; 164; 264; 364) and modulate the fluid flow rate (Φ) in accordance with a first section of a characteristic curve (C₁) when said current intensity (I) lies between a first minimum threshold value (I₁) and a second maximum threshold value (I₂).

9. Valve system according to Claim 7 or 8, in which the second movable unit (34; 134; 234; 334) also defines a second intercepting shut-off surface (62b; 162b; 262b; 362b) and the housing (12; 112) defines a second intercepting valve seat (76; 176), said inlet valve means (14; 114; 214; 314) also comprising second resillient closing means (38; 138; 238; 338) tending to retain the second intercepting shut-off surface (62b; 162b; 262b; 362b) against the second intercepting valve seat (76; 176).

10. Valve system according to Claim 9, in which the first intercepting valve seat (62a; 162a; 262a; 362a) is integral with the second intercepting shut-off surface (62b; 162b; 262b; 362b).

11. Valve system according to Claim 9 or 10, in which said second resilient closing means (38; 138; 238; 338) are arranged between the first movable unit (32; 132; 232; 332) and the second movable unit (34; 134; 234; 334).

12. Valve system according to any one of Claims 9 to 11, in which the first movable unit (32; 132; 232; 332) causes raising of the second intercepting shut-off surface (62b; 162b; 262b; 362b) from the second intercepting valve seat (76; 176) when the actuating means (16; 116) are passed through by a current with an intensity (I) greater than a second maximum threshold value (I₂).

13. Valve system according to either one of Claims 11 or 12, in which the second movable unit (32; 132; 232; 332) also defines a second modulating shut-off surface (65a; 165a; 265a; 365a) and the housing (12; 112) defines a second modulating valve seat (77; 177), said first resilient closing means (36; 136; 236; 336) tending to reduce the distance between the second modulating shut-off surface (65a; 165a; 265a; 365a) and the second modulating valve seat (77; 177).

14. Valve system according to Claims 8 and 13, in which said actuating means (16) separate the second modulating shut-off surface (65a; 165a; 265a; 365a) from the second modulating valve seat (77; 177) and modulate the fluid flow rate (Φ) in accordance with a second section of the characteristic curve (C₂) when the current intensity (I) is greater than said maximum threshold value (I₂).

15. Valve system according to any one of Claims 7 to 14, in which the first intercepting shut-off surface (54a; 154a; 254a; 354a) and the first intercepting valve seat (62a; 162a; 262a; 362a) are located upstream of the first modulating shut-off surface (50a; 150a; 250a; 350a) and the associated first modulating valve seat (64; 164; 264; 364).

16. Valve system according to Claim 15, in which the first intercepting shut-off surface (54a; 154a; 254a; 354a) and the first intercepting valve seat (62a; 162a; 262a; 362a) are located in a radially external position with respect to the first modulating shut-off surface (50a; 150a; 250a; 350a) and the associated first modulating valve seat (64; 164; 264; 364).

17. Valve system according to any one of Claims 13 to 16, in which the second intercepting shut-off surface (62b; 162b; 262b; 362b) and the second intercepting valve seat (76; 176) are located upstream of the second modulating shut-off surface (65a; 165a; 265a; 365a) and the associated second modulating valve seat (77; 177).

18. Valve system according to Claim 17, in which the second intercepting shut-off surface (62b; 162b; 262b; 362b) and the second shut-off valve seat (76; 176) are located in a radially external position with respect to the second modulating shut-off surface (65a; 165a; 265a; 365a) and the associated second modulating valve seat (77; 177).

19. Valve system according to any one of the preceding claims, in which the electromagnetic actuating means (16; 116) are located internally in a fluid-tight manner in the middle section (30; 130) of the housing (12; 112).

20. Valve system according to any one of Claims 1 to 18, in which the electromagnetic actuating means are located outside of the middle section of the housing (12).

21. Valve system according to any of the preceding Claims, in which the first movable unit (232; 332) also comprises a part mounted so as to be pivotable with respect to the first ferromagnetic core (286; 386) and the remainder of said first movable unit (232; 332) and guided by said second movable unit (234; 334).

22. Valve system according to Claim 21, in which the actuating means (16; 116) also comprise a second ferromagnetic core (88; 188) surrounded by the solenoid (92; 192) and designed to operate the outlet valve means (18; 118).

23. Valve system according to Claim 22, in which the first core (86; 186; 286; 386) and the second core (88; 188) are displaceable in opposite senses along the same direction (A-A).

24. Valve system according to Claim 23, in which the first core (86) and the second core (88) are axially displaceable in a fluid-tight manner by a fixed stop member (90).

25. System according to Claim, 19, in which said electromagnetic actuating means (16, 116) are intended to be passed over externally by the fluid flow passing through the middle section (30; 130) and to have a convective heat exchange relationship with said fluid flow.

## Patentansprüche

1. Ventilsystem (10; 110) im Besonderen zur Steuerung der Zufuhr eines Fluids von einer Vorratsquelle zu einem Gerät eines Benützers, wobei das System umfasst:
- ein Gehäuse (12; 112), das
ein Einlass-Anschlussstück (24; 124) sowie ein Auslass-Anschlussstück (26; 126), die vorgesehen sind, um eine ankommende Strömung eines Fluids aufzunehmen bzw. die Strömung des Fluids abzugeben; sowie
einen Mittelteil (30; 130) aufweist, der mit dem Einlass-Anschlussstück (24; 124) bzw. mit dem Auslass-Anschlussstück (26; 126) in einer Fluidverbindung steht;
- eine Einlass- und eine Auslass-Ventileinrichtung (14; 114; 214; 314; 18; 118), die zwischen dem Einlass-Anschlussstück (24; 124) und dem Mittelteil (30; 130) sowie zwischen dem Mittelteil (30; 130) und dem Auslass-Anschlussstück (26; 126) liegen; und
- eine elektromagnetische Stelleinrichtung (16; 116), die so aufgebaut ist, dass durch sie ein elektrischer Erregerstrom fließen kann, der eine Stärke (I) besitzt, die so moduliert werden kann, dass die Stelleinrichtung (16; 116) die Einlass-Ventileinrichtung (14; 114; 214; 314) in einem modulierten offenen Zustand anordnet, in dem die Durchflussmenge des Fluids (Φ) größer wird, wenn die Stärke (I) des Stroms ansteigt;
wobei die elektromagnetische Stelleinrichtung (16; 116) so aufgebaut ist, dass sie mit einem Strom aktiviert werden kann, dessen Stärke (I) moduliert wird;
wobei das Ventilsystem (10; 110) **dadurch gekennzeichnet ist, dass**
die Einlass-Ventileinrichtung (14; 114) erste und zweite Einlassventile (54, 62; 62, 76) umfasst, die mit einer ersten bzw. einer zweiten elastischen Schließeinrichtung (36; 38) versehen sind, die versucht, die Einlassventile (54, 62; 62, 76) in einem geschlossenen Zustand halten, und dass
die elektromagnetische Stelleinrichtung (16; 116) eine Solenoidspule (92; 192) umfasst, die so angeordnet ist, dass sie die beiden Einlassventile (54, 62; 62, 76) dadurch steuert, dass sie einen ersten bewegbaren ferromagnetischen Kern (86; 186; 286; 386) steuert, der so aufgebaut ist, dass er
eine Ruhestellung, in der beide Einlassventile (54, 62; 62, 76) geschlossen sind, wenn die Solenoidspule (92; 192) nicht erregt ist, sowie
eine erste und eine zweite Arbeitsstellung annimmt, in der das erste Einlassventil (54, 62) bzw. beide Einlassventile (54, 62; 62, 76) einen modulierten offenen Zustand annehmen, wenn der Strom (I) in der Solenoidspule (92; 192) innerhalb eines ersten und eines zweiten Wertebereichs moduliert wird.

2. Ventilsystem gemäß Anspruch 1, wobei im ersten und zweiten Wertebereich des Stroms in der Solenoidspule (I) in Übereinstimmung mit einem ersten bzw. einem zweiten Anstieg (k₁; k₂) erhöht wird, wobei der erste Anstieg (k₁) kleiner als der zweite Anstieg (k₂) ist.

3. Ventilsystem gemäß Anspruch 1 oder 2, wobei die erste bewegbare Einheit (32; 132; 232; 332) sowie die zweite bewegbare Einheit (34; 134; 234; 334) so angebracht sind, dass sie relativ zueinander verschiebbar sind.

4. System gemäß Anspruch 3, wobei die erste bewegbare Einheit (32; 132; 232; 332) sowie die zweite bewegbare Einheit (34; 134; 234; 334) so angebracht sind, dass sie koaxial zueinander liegen.

5. Ventilsystem gemäß irgendeinem der Ansprüche 1 bis 4, wobei die erste bewegbare Einheit (32; 132; 232; 332) eine erste absperrende Absperrfläche (54a; 154a; 254a; 354a) bildet und die zweite bewegbare Einheit (34; 134; 234; 334) einen ersten absperrenden Ventilsitz (62a; 162a; 262a; 362a) bildet, wobei die erste elastische Schließeinrichtung (36; 136; 236; 336) versucht, die erste absperrende Absperrfläche (54a; 154a; 254a; 354a) gegen den ersten absperrenden Ventilsitz (62a; 162a; 262a; 362a) zu drücken.

6. Ventilsystem gemäß Anspruch 5, wobei die Stelleinrichtung (16) die absperrende Absperrfläche (54a; 154a; 254a; 354a) vom ersten absperrenden Ventilsitz (62a; 162a; 262a; 362a) anhebt, wenn die Stromstärke (I) größer als ein erster minimaler Schwellenwert (I₁) ist, der ausreicht, um der Kraft der ersten Schließfeder (36; 136; 236; 336) entgegenzuwirken.

7. Ventilsystem gemäß Anspruch 5 oder 6, wobei die erste bewegbare Einheit (32; 132; 232; 332) weiters eine erste modulierende Absperrfläche (50a; 150a; 250a; 350a) bildet und die zweite bewegbare Einheit (34; 134; 234; 334) einen ersten modulierenden Ventilsitz (64; 164; 264; 364) bildet, wobei die erste elastische Schließeinrichtung (36; 136; 236; 336) versucht, den Abstand zwischen der ersten modulierenden Absperrfläche (50a; 150a; 250a; 350a) und dem ersten modulierenden Ventilsitz (64; 164; 264; 364) zu verkleinern.

8. Ventilsystem gemäß Anspruch 7, wobei die Stelleinrichtung (16) die erste modulierende Absperrfläche (50a; 150a; 250a; 350a) vom ersten modulierenden Ventilsitz (64; 164; 264; 364) trennt und die Durchflussmenge des Fluids (Φ) in Übereinstimmung mit einem ersten Teil einer Kennlinie (C₁) moduliert, wenn die Stromstärke (I) zwischen einem ersten minimalen Schwellenwert (I₁) und einem zweiten maximalen Schwellenwert (I₂) liegt.

9. Ventilsystem gemäß Anspruch 7 oder 8, wobei die zweite bewegbare Einheit (34; 134; 234; 334) weiters eine zweite absperrende Absperrfläche (62b; 162b; 262b; 362b) bildet und das Gehäuse (12; 112) einen zweiten absperrenden Ventilsitz (76; 176) bildet, wobei die Einlass-Ventileinrichtung (14; 114; 214; 314) weiters eine zweite elastische Schließeinrichtung (38; 138; 238; 338) umfasst, die versucht, die zweite absperrende Absperrfläche (62b; 162b; 262b; 362b) gegen den zweiten absperrenden Ventilsitz (76; 176) zu halten.

10. Ventilsystem gemäß Anspruch 9, wobei der erste absperrende Ventilsitz (62a; 162a; 262a; 362a) mit der zweiten absperrenden Absperrfläche (62b; 162b; 262b; 362b) gemeinsam ausgebildet ist.

11. Ventilsystem gemäß Anspruch 9 oder 10, wobei die zweite elastische Schließeinrichtung (38; 138; 238; 338) zwischen der ersten bewegbaren Einheit (32; 132; 232; 332) und der zweiten bewegbaren Einheit (34; 134; 234; 334) angeordnet ist.

12. Ventilsystem gemäß irgendeinem der Ansprüche 9 bis 11, wobei die erste bewegbare Einheit (32; 132; 232; 332) veranlasst, dass die zweite absperrende Absperrfläche (62b; 162b; 262b; 362b) vom zweiten absperrenden Ventilsitz (76; 176) angehoben wird, wenn durch die Stelleinrichtung (16; 116) ein Strom mit einer Stärke (I) fließt, die größer als ein zweiter maximaler Schwellenwert (I₂) ist.

13. Ventilsystem gemäß einem der Ansprüche 11 oder 12, wobei die zweite bewegbare Einheit (32; 132; 232; 332) weiters eine zweite modulierende Absperrfläche (65a; 165a; 265a; 365a) bildet und das Gehäuse (12; 112) einen zweiten modulierenden Ventilsitz (77; 177) bildet, wobei die erste elastische Schließeinrichtung (36; 136; 236; 336) versucht, den Abstand zwischen der zweiten modulierenden Absperrfläche (65a; 165a; 265a; 365a) und dem zweiten modulierenden Ventilsitz (77; 177) zu verkleinern.

14. Ventilsystem gemäß Anspruch 8 und 13, wobei die Stelleinrichtung (16) die zweite modulierende Absperrfläche (65a; 165a; 265a; 365a) vom zweiten modulierenden Ventilsitz (77; 177) trennt und die Durchflussmenge des Fluids (Φ) in Übereinstimmung mit einem zweiten Teil der Kennlinie (C₂) moduliert, wenn die Stromstärke (I) größer als der maximale Schwellenwert (I₂) ist.

15. Ventilsystem gemäß irgendeinem der Ansprüche 7 bis 14, wobei die erste absperrende Absperrfläche (54a; 154a; 254a; 354a) und der erste absperrende Ventilsitz (62a; 162a; 262a; 362a) stromaufwärts der ersten modulierenden Absperrfläche (50a; 150a; 250a; 350a) und des zugeordneten ersten modulierenden Ventilsitzes (64; 164; 264; 364) angeordnet sind.

16. Ventilsystem gemäß Anspruch 15, wobei die erste absperrende Absperrfläche (54a; 154a; 254a; 354a) und der erste absperrende Ventilsitz (62a; 162a; 262a; 362a) an einer radial äußeren Stellung zur ersten modulierenden Absperrfläche (50a; 150a; 250a; 350a) und dem zugeordneten ersten modulierenden Ventilsitz (64; 164; 264; 364) angeordnet sind.

17. Ventilsystem gemäß irgendeinem der Ansprüche 13 bis 16, wobei die zweite absperrende Absperrfläche (62b; 162b; 262b; 362b) und der zweite absperrende Ventilsitz (76; 176) stromaufwärts der zweiten modulierenden Absperrfläche (65a; 165a; 265a; 365a) und des zugeordneten zweiten modulierenden Ventilsitzes (77; 177) angeordnet sind.

18. Ventilsystem gemäß Anspruch 17, wobei die zweite absperrende Absperrfläche (62b; 162b; 262b; 362b) und der zweite Absperr-Ventilsitz (76; 176) an einer radial äußeren Stelle zur zweiten modulierenden Absperrfläche (65a; 165a; 265a; 365a) und dem zugeordneten zweiten modulierenden Ventilsitz (77; 177) angeordnet sind.

19. Ventilsystem gemäß irgendeinem der bisherigen Ansprüche, wobei die elektromagnetische Stelleinrichtung (16; 116) innerhalb des Mittelteils (30; 130) des Gehäuses (12; 112) fluiddicht angeordnet ist.

20. Ventilsystem gemäß irgendeinem der Ansprüche 1 bis 18, wobei die elektromagnetische Stelleinrichtung außerhalb des Mittelteils des Gehäuses (12) angeordnet ist.

21. Ventilsystem gemäß irgendeinem der bisherigen Ansprüche, wobei die erste bewegbare Einheit (232; 332) weiters einen Teil umfasst, der so angeordnet ist, dass er zum ersten ferromagnetischen Kern (286; 386) und dem Rest der ersten bewegbaren Einheit (232; 332) verschwenkt werden kann, wobei er von der zweiten bewegbaren Einheit (234; 334) geführt wird.

22. Ventilsystem gemäß Anspruch 21, wobei die Stelleinrichtung (16; 116) weiters einen zweiten ferromagnetischen Kern (88; 188) umfasst, der von der Solenoidspule (92; 192) umgeben und so ausgebildet ist, dass er die Auslass-Ventileinrichtung (18; 118) betätigt.

23. Ventilsystem gemäß Anspruch 22, wobei der erste Kern (86; 186; 286; 386) und der zweite Kern (88; 188) in entgegengesetzte Richtungen entlang der selben Richtung (A-A) ausgelenkt werden können.

24. Ventilsystem gemäß Anspruch 23, wobei der erste Kern (86) und der zweite Kern (88) von einem ortsfesten Anschlagelement (90) fluiddicht axial ausgelenkt werden können.

25. System gemäß Anspruch 19, wobei die elektromagnetische Stelleinrichtung (16; 116) so vorgesehen ist, dass über sie außen die Fluidströmung fließt, die den Mittelteil (30; 130) durchströmt, wobei sie mit dieser Fluidströmung in einem Konvektionswärmeaustausch steht.

## Revendications

1. Système de vannes (10 ; 110), en particulier pour réguler la fourniture d'un fluide d'une source d'alimentation à un appareil d'utilisateur, ledit système comprenant :
- un logement (12 ; 112) comprenant :
un raccord d'entrée (24 ; 124) et un raccord de sortie (26 ; 126) destinés à recevoir un écoulement de fluide entrant et à décharger ledit écoulement de fluide, respectivement ; et
une section centrale (30 ; 130) en communication fluidique avec le raccord d'entrée (24 ; 124) et le raccord de sortie (26 ; 126), respectivement ;
- des moyens formant vannes d'entrée et de sortie (14 ; 114 ; 214 ; 314 ; 18 ; 118) agencés entre le raccord d'entrée (24 ; 124) et la section centrale (30 ; 130) et entre la section centrale (30 ; 130) et le raccord de sortie (26 ; 126) ; et
- des moyens d'actionnement électromagnétiques (16 ; 116) conçus pour être traversés par un courant d'excitation électrique ayant une intensité (I) qui peut être modulée de sorte que les moyens d'actionnement (16 ; 116) agencent les moyens formant vanne d'entrée (14 ; 114 ; 214 ; 314) dans une condition ouverte modulée où ledit débit de fluide (Φ) augmente avec une augmentation de l'intensité (I) dudit courant ;
lesdits moyens d'actionnement électromagnétiques (16 ; 116) étant conçus pour être activés par un courant avec une intensité (I) modulée ;
le système de vannes (10 ; 110) étant **caractérisé en ce que**
les moyens formant vanne d'entrée (14 ; 114) comprennent des première et deuxième vannes d'entrée (54, 62 ; 62, 76) pourvues de premiers et deuxièmes moyens de fermeture élastiques (36 ; 38) tendant respectivement à retenir lesdites vannes d'entrée (54, 62 ; 62, 76) dans une condition fermée, et **en ce que**
les moyens d'actionnement électromagnétiques (16 ; 116) comprennent un solénoïde (92 ; 192) agencé pour commander lesdites deux vannes d'entrée (54, 62 ; 62, 76) en commandant un premier noyau ferromagnétique mobile (86 ; 186 ; 286 ; 386) qui est conçu pour adopter
une position de repos dans laquelle les deux vannes d'entrée (54, 62 ; 62, 76) sont fermées, lorsque ledit solénoïde (92 ; 192) n'est plus excité, et
des première et deuxième positions de travail dans lesquelles la première vanne d'entrée (54, 62) et les deux vannes d'entrée (54, 62 ; 62, 76), respectivement, adoptent une condition ouverte modulée, lorsque le courant (I) dans ledit solénoïde (92 ; 192) est modulé dans des première et deuxième plages de valeurs, respectivement.

2. Système de vannes selon la revendication 1, dans lequel, dans lesdites première et deuxième plages de valeurs, le courant de solénoïde (I) est augmenté conformément à des premier et deuxième taux d'augmentation (k₁ ; k₂), respectivement, ledit premier taux d'augmentation (k₁) étant inférieur audit deuxième taux d'augmentation (k₂).

3. Système de vannes selon la revendication 1 ou 2, dans lequel la première unité mobile (32 ; 132 ; 232 ; 332) et la deuxième unité mobile (34 ; 134 ; 234 ; 334) sont montées de manière à pouvoir coulisser l'une par rapport à l'autre.

4. Système selon la revendication 3, dans lequel la première unité mobile (32 ; 132 ; 232 ; 332) et la deuxième unité mobile (34 ; 134 ; 234 ; 334) sont montées de manière à être coaxiales l'une par rapport à l'autre.

5. Système de vannes selon l'une quelconque des revendications 1 à 4, dans lequel la première unité mobile (32 ; 132 ; 232 ; 332) définit une première surface de fermeture d'interception (54a ; 154a ; 254a ; 354a) et la deuxième unité mobile (34 ; 134 ; 234 ; 334) définit un premier siège de vanne d'interception (62a ; 162a ; 262a ; 362a), lesdits premiers moyens de fermeture élastiques (36 ; 136 ; 236 ; 336) tendant à pousser la première surface de fermeture d'interception (54a ; 154a ; 254a ; 354a) contre le premier siège de vanne d'interception (62a ; 162a ; 262a ; 362a).

6. Système de vannes selon la revendication 5, dans lequel lesdits moyens d'actionnement (16) soulèvent la surface de fermeture d'interception (54a ; 154a ; 254a ; 354a) du premier siège de vanne d'interception (62a ; 162a ; 262a ; 362a) lorsque l'intensité (I) du courant est supérieure à une première valeur de seuil minimum (I₁) appropriée pour s'opposer à l'action du premier ressort de fermeture (36 ; 136 ; 236 ; 336).

7. Système de vannes selon la revendication 5 ou 6, dans lequel la première unité mobile (32 ; 132 ; 232 ; 332) définit également une première surface de fermeture de modulation (50a ; 150a ; 250a ; 350a) et la deuxième unité mobile (34 ; 134 ; 234 ; 334) définit un premier siège de vanne de modulation (64 ; 164 ; 264 ; 364), lesdits premiers moyens de fermeture élastiques (36 ; 136 ; 236 ; 336) tendant à réduire la distance entre la première surface de fermeture de modulation (50a ; 150a ; 250a ; 350a) et le premier siège de vanne de modulation (64 ; 164 ; 264 ; 364).

8. Système de vannes selon la revendication 7, dans lequel lesdits moyens d'actionnement (16) séparent la première surface de fermeture de modulation (50a ; 150a ; 250a ; 350a) du premier siège de vanne de modulation (64 ; 164 ; 264 ; 364) et modulent le débit de fluide (Φ) conformément à une première section d'une courbe caractéristique (C₁) lorsque ladite intensité (I) du courant se trouve entre une première valeur de seuil minimum (I₁) et une deuxième valeur de seuil maximum (I₂).

9. Système de vannes selon la revendication 7 ou 8, dans lequel la deuxième unité mobile (34 ; 134 ; 234 ; 334) définit également une deuxième surface de fermeture d'interception (62b ; 162b ; 262b ; 362b) et le logement (12 ; 112) définit un deuxième siège de vanne d'interception (76 ; 176), lesdits moyens formant vanne d'entrée (14 ; 114 ; 214 ; 314) comprenant également des deuxièmes moyens de fermeture élastiques (38 ; 138 ; 238 ; 338) tendant à retenir la deuxième surface de fermeture d'interception (62b ; 162b ; 262b ; 362b) contre le deuxième siège de vanne d'interception (76 ; 176).

10. Système de vannes selon la revendication 9, dans lequel le premier siège de vanne d'interception (62a ; 162a ; 262a ; 362a) est d'un seul tenant avec la deuxième surface de fermeture d'interception (62b ; 162b ; 262b ; 362b).

11. Système de vannes selon la revendication 9 ou 10, dans lequel lesdits deuxièmes moyens de fermeture élastiques (38 ; 138 ; 238 ; 338) sont agencés entre la première unité mobile (32 ; 132 ; 232 ; 332) et la deuxième unité mobile (34 ; 134 ; 234 ; 334).

12. Système de vannes selon l'une quelconque des revendications 9 à 11, dans lequel la première unité mobile (32 ; 132 ; 232 ; 332) provoque le soulèvement de la deuxième surface de fermeture d'interception (62b ; 162b ; 262b ; 362b) du deuxième siège de vanne d'interception (76 ; 176) lorsque les moyens d'actionnement (16 ; 116) sont traversés par un courant avec une intensité (I) supérieure à une deuxième valeur de seuil maximum (I₂).

13. Système de vannes selon l'une ou l'autre des revendications 11 ou 12, dans lequel la deuxième unité mobile (32 ; 132 ; 232 ; 332) définit également une deuxième surface de fermeture de modulation (65a ; 165a ; 265a ; 365a) et le logement (12 ; 112) définit un deuxième siège de vanne de modulation (77 ; 177), lesdits premiers moyens de fermeture élastiques (36 ; 136 ; 236 ; 336) tendant à réduire la distance entre la deuxième surface de fermeture de modulation (65a ; 165a ; 265a ; 365a) et le deuxième siège de vanne de modulation (77 ; 177).

14. Système de vannes selon les revendications 8 et 13, dans lequel lesdits moyens d'actionnement (16) séparent la deuxième surface de fermeture de modulation (65a ; 165a ; 265a ; 365a) du deuxième siège de vanne de modulation (77 ; 177) et modulent le débit de fluide (Φ) conformément à une deuxième section de la courbe caractéristique (C₂) lorsque l'intensité (I) du courant est supérieure à ladite valeur de seuil maximum (I₂).

15. Système de vannes selon l'une quelconque des revendications 7 à 14, dans lequel la première surface de fermeture d'interception (54a ; 154a ; 254a ; 354a) et le premier siège de vanne d'interception (62a ; 162a ; 262a ; 362a) sont situés en amont de la première surface de fermeture de modulation (50a ; 150a ; 250a ; 350a) et du premier siège de vanne de modulation (64 ; 164 ; 264 ; 364) associé.

16. Système de vannes selon la revendication 15, dans lequel la première surface de fermeture d'interception (54a ; 154a ; 254a ; 354a) et le premier siège de vanne d'interception (62a ; 162a ; 262a ; 362a) sont situés à une position radialement externe par rapport à la première surface de fermeture de modulation (50a ; 150a ; 250a ; 350a) et au premier siège de vanne de modulation (64 ; 164 ; 264 ; 364) associé.

17. Système de vannes selon l'une quelconque des revendications 13 à 16, dans lequel la deuxième surface de fermeture d'interception (62b ; 162b ; 262b ; 362b) et le deuxième siège de vanne d'interception (76 ; 176) sont situés en amont de la deuxième surface de fermeture de modulation (65a ; 165a ; 265a ; 365a) et du deuxième siège de vanne de modulation (77 ; 177) associé.

18. Système de vannes selon la revendication 17, dans lequel la deuxième surface de fermeture d'interception (62b ; 162b ; 262b ; 362b) et le deuxième siège de vanne de fermeture (76 ; 176) sont situés à une position radialement externe par rapport à la deuxième surface de fermeture de modulation (65a ; 165a ; 265a ; 365a) et au deuxième siège de vanne de modulation (77 ; 177) associé.

19. Système de vannes selon l'une quelconque des revendications précédentes, dans lequel les moyens d'actionnement électromagnétiques (16 ; 116) sont situés intérieurement d'une manière étanche aux fluides dans la section centrale (30 ; 130) du logement (12 ; 112).

20. Système de vannes selon l'une quelconque des revendications 1 à 18, dans lequel les moyens d'actionnement électromagnétiques sont situés à l'extérieur de la section centrale du logement (12).

21. Système de vannes selon l'une quelconque des revendications précédentes, dans lequel la première unité mobile (232 ; 332) comprend également une partie montée de manière à pouvoir pivoter par rapport au premier noyau ferromagnétique (286 ; 386) et au reste de ladite première unité mobile (232 ; 332) et guidée par ladite deuxième unité mobile (234 ; 334).

22. Système de vannes selon la revendication 21, dans lequel les moyens d'actionnement (16 ; 116) comprennent également un deuxième noyau ferromagnétique (88 ; 188) entouré par le solénoïde (92 ; 192) et conçu pour actionner les moyens formant vanne de sortie (18 ; 118).

23. Système de vannes selon la revendication 22, dans lequel le premier noyau (86 ; 186 ; 286 ; 386) et le deuxième noyau (88 ; 188) peuvent être déplacés dans des sens opposés le long de la même direction (A-A).

24. Système de vannes selon la revendication 23, dans lequel le premier noyau (86) et le deuxième noyau (88) peuvent être déplacés axialement d'une manière étanche aux fluides par un élément d'arrêt fixe (90).

25. Système selon la revendication 19, dans lequel l'écoulement de fluide traversant la section centrale (30 ; 130) passe extérieurement sur lesdits moyens d'actionnement électromagnétiques (16 ; 116) et ceux-ci ont une relation d'échange de chaleur par convection avec ledit écoulement de fluide.
